# EUROPEAN PATENT SPECIFICATION

(11) **EP 4 272 414 B1**
(45) Date of publication and mention of the grant of the patent: **24.09.2025**
(21) Application number: 21807305.4
(22) Date of filing: 08.11.2021
(51) Int. Cl.: H04L 67/125, H04L 69/321

(54) **NETWORK NODE, MOBILE NODE AND METHODS PERFORMED THEREIN**
NETZWERKKNOTEN, MOBILER KNOTEN UND DARIN DURCHGEFÜHRTE VERFAHREN
NOEUD DE RÉSEAU, NOEUD MOBILE ET PROCÉDÉS MIS EN OEUVRE DANS CE CADRE

(30) Priority: 29.12.2020 SE 2051571
(43) Date of publication of application: 08.11.2023
(73) Proprietor: Epiroc Rock Drills Aktiebolag, 701 91 Örebro (SE)
(72) Inventor: SANTOS, Wesley, 702 28 Örebro (SE)
(74) Representative: Epiroc Rock Drills AB
(86) International application number: PCT/SE2021/051109
(87) International publication number: WO 2022/146210

(56) References cited:
- WO-A1-2020/074084
- CN-A- 109 788 578
- US-A1- 2016 271 794
- US-A1- 2019 268 267

## Description

### TECHNICAL FIELD

Embodiments herein relate to a network node, a mobile node and methods performed therein for communication. Furthermore, a computer program and a computer readable storage medium are also provided herein. In particular, embodiments herein relate to enabling communication between the network node and the mobile node in a communication network in a reliable manner.

### BACKGROUND

Mining machines operating in a mining environment may be manually controlled, remotely controlled, or operating in an autonomous mode. When being remotely controlled the mining machines may be connected to a control arrangement over different types of communication networks using different radio technologies and protocols. Industrial communication protocols are not very suited for operating in internet protocol (IP) networks. This has created many difficulties when integrating automation solutions into a customer's network. A typical issue is related to a safety system for controlling automated steering of mining machinery where specific communication protocols such as Profinet and Modbus may be used. Since the safety systems in this mining machinery system are designed to react at very short response times and get easily triggered by very sensitive sensors, the safety systems are constantly causing short stops of mining machines at customer sites. These stops are creating unnecessary costs in loss of productivity as well and wear of machinery equipment since the mining machines need to be ignited after each stop. Now that customers are migrating to telecommunication networks using technologies such as LTE and 5G, the integration of these systems have showed to be even more challenging and may become a show-stopper at some mine sites.

Safety systems using Profinet incorporates a safety communication protocol called Profinet Safety (Profisafe), which is required for the safety system to meet functional safety requirements. This protocol, as well as the Modbus protocol, is very sensitive to disturbances on the network which imposes a real challenge for mobile machinery automation since the sensitive data has to be transmitted wirelessly forcing safety critical data to be transmitted over unreliable medium. Thus, these disturbances on the safety critical data are constantly causing short stops leading to an unreliable and non-fluent operation of the mine site.

An example of background art is document WO 2020/074084 A1 in which communication between a controller and a controlled device over a wireless network is disclosed.

Another example of background art is document US 2016/0271794 A1 in which a robot control system provided with function of changing criterion for communication quality in accordance with distance between machine and portable wireless operation panel is disclosed.

### SUMMARY

This is a real problem today and an object of embodiments herein is to provide a mechanism for enabling communication with a mining machine in a reliable manner avoiding interferences that may lead to a shutdown of one or more functions at the mining machine.

The solution is defined by the independent claims. Further detailed embodiments are defined in the dependent claims.

Embodiments herein introduce a new functionality wherein safety critical data are transmitted encapsulated in layer-3 transport data packet over a connection between the network node and the mobile mode; thereby mitigating communication interference on the layer-2 data packet and avoiding accidentally setting off the function for triggering the shutdown of the one or more functions at the mining machine. Thus, embodiments herein overcome both protocol compatibility as well as noise resilience issues described above. This will lead to a more reliable and robust communication avoiding accidental short stops of the one or more functions at the mining machine and hence reducing costs and wear on the mining machines and further provide an energy efficient solution.

### BRIEF DESCRIPTION OF THE DRAWINGS

Embodiments will now be described in more detail in relation to the enclosed drawings, in which:
- Fig. 1: is a schematic overview depicting a communication network comprising network nodes according to embodiments herein;
- Fig. 2: is a combined flowchart and signalling scheme according to embodiments herein;
- Fig. 3: shows a flowchart depicting a method performed by a network node according to embodiments herein;
- Fig. 4: shows a flowchart depicting a method performed by a mobile node according to embodiments herein;
- Fig. 5a: is a schematic overview depicting a communication network comprising network nodes according to embodiments herein;
- Fig. 5b: is a schematic overview depicting a communication network comprising network nodes according to embodiments herein;
- Fig. 6: shows a block diagram depicting embodiments of a network node according to embodiments herein; and
- Fig. 7: shows a block diagram depicting embodiments of a mobile node according to embodiments herein.

### DETAILED DESCRIPTION

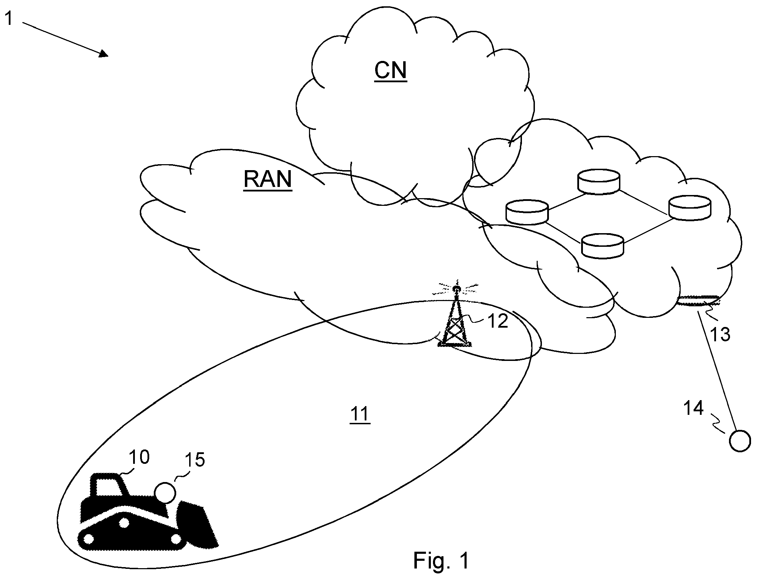

Embodiments herein relate to communication networks in general. **Fig. 1** is a schematic overview depicting a **communication network 1.** The communication network 1 comprises one or more access networks (AN), one or more CNs, and/or backbone communication networks. The communication network 1 may use a number of different technologies, such as Local area network (LAN), IP-network, Wi-Fi, Long Term Evolution (LTE), LTE-Advanced, 5G such as new radio (NR), Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations.

In the communication network 1, a **mining machine 10,** for example, a loader-hauler-dumper (LHD) machine, a drill rig, a mobility equipment, a vehicle, and/or a mobile truck, communicate with one another as well as with network nodes via one or more Access Networks (AN), e.g. RAN, to one or more core networks (CN). It should be understood by those skilled in the art that "mining machine" is a non-limiting term which means any vehicle, such as an autonomous vehicle or remotely controlled vehicle that may be remotely controlled in a mining operational scenario.

The communication network 1 comprises **a first access node 12** providing radio coverage over a geographical area, a first service area, of a first radio access technology (RAT), such as NR, LTE, UMTS, Wi-Fi or similar. The first access node 12 such as radio network node or an access point such as a WLAN access point or an Access Point Station (AP STA), an access controller, a base station, e.g. a radio base station such as a NodeB, an evolved Node B (eNB, eNodeB), a gNB, a base transceiver station, Access Point Base Station, base station router, a transmission arrangement of a radio base station, a stand-alone access point or any other network unit capable of serving mobile devices within the service area served by the first access node 12 depending e.g. on the first radio access technology and terminology used.

**A network node 14** is arranged to operate in the communication network 1 and be connected to the communication network 1 through a wired connection or through **a second access node 13** providing radio coverage over a geographical area, a second service area, of the first RAT or a second RAT, such as NR, LTE, UMTS, Wi-Fi or similar. The network node 14, also referred to as control network node, is arranged for mediating safety critical data to **a mobile node 15** in the communication network 1. The network node 14 may be comprised in a control arrangement controlling the mining machine 10. The mobile node 15 is associated with the mining machine 10 e.g. arranged at or within the mining machine 10. According to embodiments herein the network node 14 obtains a data packet carrying safety critical data for controlling the mining machine 10, wherein the data packet is a layer-2 data packet. The network node 14 creates a layer-3 transport data packet comprising the layer-2 data packet, wherein the layer-3 transport data packet encapsulates the layer-2 data packet; and transmits the layer-3 transport data packet over the communication network to the mobile node 15.

Additionally, the mobile node 15 at the mining machine 10 receives from the network node 14, the layer-3 transport data packet and retrieves the safety critical data from the layer-3 transport data packet by decapsulating the layer-2 data packet from the layer-3 transport data packet. The mobile node 15 then uses the safety critical data in a control process of the mining machine e.g. the safety critical data may indicate values to be used for enable or disable a safety function triggering a shutdown of one or more functions of the mining machine 10, for example, controlling vehicle parts such as engine, brakes and/or fuel valve at the mining machine thus controlling the autonomous and/or remotely controlled mining machine.

Furthermore, the network node 14 and/or the mobile node 15 comprise a function for triggering a shut-down of the mining machine upon fulfilment of one or more requirements. For example, one requirement may be that performance of a connection between the network node 14 and the mobile node 15 is below a threshold such as signal strength or quality a shut-down of the mining machine 10 will be triggered. The layer-3 transport data packet, upon transmission over the connection, mitigates communication interference on the layer-2 data packet since it encapsulates the layer-2 data packet and thereby avoids accidentally setting off the function for triggering the shutdown of one or more functions at the mining machine.

Every data communication over the connection such as a Profinet transaction or a Modbus transaction during communication has a unique ID and if a frame carrying data arrives late or if it doesn't arrive at all (lost in transmission) the system will wait for the next one. Now this kind of delays are often caused by congestion, interference/noise, "hidden-node" as well as handover time what reduces network capacity temporarily and may increase bit error rate (BER). Therefore, it is herein suggested that the safety critical data, such as data for enabling or disabling a safety function controlling one or more vehicle parts or operations at the mining machine, to be logically and physically isolated from other types of traffic and encapsulated into the layer-3 transport data packet before transmitted over the connection between the network node 14 and the mobile node 15.

As stated before, embodiments herein aim to enhance system resilience in the case of interference which may cause excessive packet loss and/or corrupt payload information forcing the mining machine 10 to switch off.

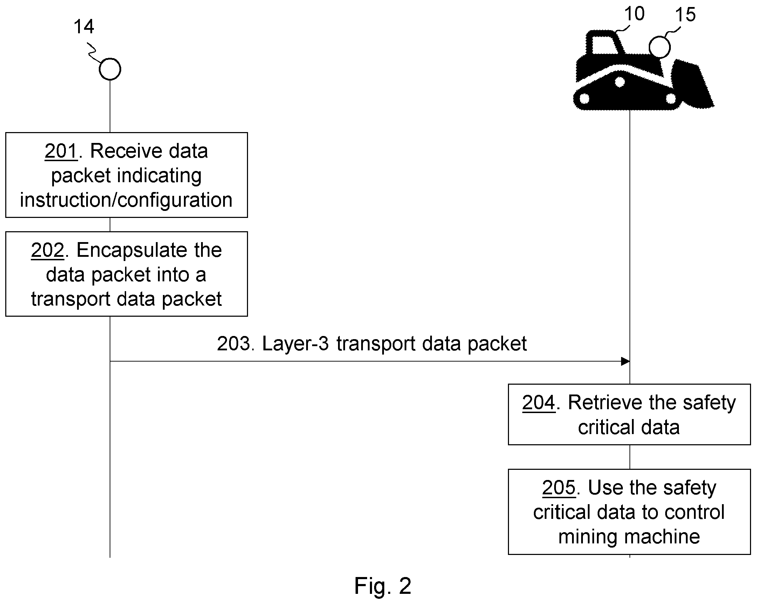

**Fig. 2** is a combined flowchart and signaling scheme according to embodiments herein for, e.g. avoiding accidental or unnecessary shutdowns of one or more functions at the mining machine 10.

**Action 201.** An autonomous function or a user of the control arrangement, such as a safety master cabinet, inputs controlling instructions or configuration into the control arrangement. The controlling instructions or configuration may be automatically communicated between the mobile node and the network node 15 that may be continuously communicated over the connection between the mobile node and the network node 14 for enabling or disabling a safety switch controlling operations of vehicle parts. These inputs, thus, generate operational control data, i.e., safety critical data, for controlling mobility and/or operation of the mining machine. If, for example, the communication is interfered or disrupted one or more functions at the mining machine will be switched off. The input may alternatively or additionally be input using direction buttons or a joystick. The safety critical data are arranged in a layer-2 data packet and the network node 14 obtains or receive the layer-2 data packet carrying the safety critical data. The critical data may thus be related to the instruction(s), and thus the layer-2 data packet may thus indicate an instruction for the mining machine 10.

**Action 202.** The network node 14 then encapsulates the layer-2 data packet into a layer-3 transport data packet. For example, the network node 14 may add a layer-3 header, such as an IP header, to the layer-2 data packet creating the layer-3 packet. Thus, to improve resilience of the data communication using, e.g., Profisafe or Modbus protocol, embodiments herein create a dedicated network overlay for the safety critical data such as control data for keeping one or more functions of the mining machine 10 up and running, or shutting down the same. For example, a command defining a go or a no-go of an operation or function at the mining machine 10. The safety critical data may further comprise other delay sensitive data, such as data for real-time applications and/or operations e.g. direction instructions, drilling instructions, speed instructions. A dedicated network overlay is a constructed software-based virtual network that allows the mining machine controlled by safety critical data to communicate freely independently upon the type of infrastructure in between. The layer-2 data packet carrying the safety critical data, i.e. a payload sensitive for delay, is then wrapped in additional layers which creates a shield around the layer-2 data packet, improving the chances of the safety critical data getting across the network intact and without delay.

**Action 203.** The network node 14 transmits the layer-3 transport data packet to the mobile node 15 associated with the mining machine 10.

**Action 204.** The mobile node 15 arranged at the mining machine retrieves the safety critical data from the layer-3 transport data packet by decapsulating the layer-2 data packet from the layer-3 transport data packet. For example, remove the additional header over the layer-2 data packet added at the network node 14.

**Action 205.** The mobile node 15 then uses the safety critical data in a control process of the mining machine. The control process may relate to one or more of the following: operation of the mining machine e.g. shutting down one or more functions or keeping them up and running, a change of direction of the mining machine 10; a speed of the mining machine 10; an operation of the mining machine 10, and a performance of the mining machine 10. Thus, since the layer-3 transport mitigates interference the number of shutdowns of the mining machine will be reduced leading to a more reliable control of operation of the mining machine. Furthermore, embodiments herein cause less wear on machine parts since every start and stop of a mining machine wears on machine parts. In addition, the energy efficiency of operating the mining machine is improved since the number of starts and stops consumes more energy than having these functions up and running.

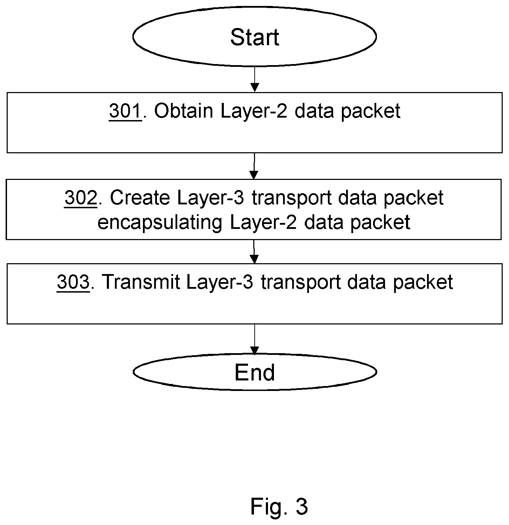

The method actions in the network node 14 for mediating to the mobile node 15 in the communication network, safety critical data for controlling the mining machine 10 according to embodiments herein will now be described with reference to a flowchart depicted in Fig. 3. The actions do not have to be taken in the order stated below, but may be taken in any suitable order. The mobile node 15 is associated with the mining machine 10, and the network node and/or the mobile node 15 comprises a function or a trigger unit for triggering a shutdown of one or more functions at the mining machine upon fulfilment of one or more requirements. Thus, the network node and/or the mobile node 15 may be configured for triggering a shutdown of one or more functions at the mining machine upon fulfilment of one or more requirements. Embodiments herein control operation of the mining machine 10 achieving less wear on machine parts as well as providing an energy efficient solution of operating the mining machine reducing number of starts and stops consumes more energy than having these functions up and running. It should be noted that the communication network may be a local area network configured to communicatively connect a plurality of mining machines to one or more central control stations carrying one or more network nodes 14. The communication network may, e.g., be arranged in an underground mining scenario and/or an above ground mining scenario. The local area network may be a wireless local area network, or a combination of a wired and wireless local area network.

**Action 301.** The network node 14 obtains the data packet carrying safety critical data for controlling the mining machine, wherein the data packet is a layer-2 data packet. The safety critical data is used control the one or more functions of the mining machine such as mobility and is sensitive to delays and interruptions and may thus be referred to as redundancy-sensitive data, such as data related to automatic control of mining machine, real time applications or operations, data concerning sensitive operational tasks or similar. The layer-2 data packet may, for example, comprise safety critical data for controlling a mobility of the mining machine 10.

**Action 302.** The network node 14 further creates a layer-3 transport data packet comprising the layer-2 data packet, wherein the layer-3 transport data packet encapsulates the layer-2 data packet.

**Action 303.** The network node 14 transmits the layer-3 transport data packet over the communication network 1 to the mobile node 15. The one or more requirements may relate to a performance of the connection between the network node and the mobile node 15, e.g. a threshold for a signal strength value or signa quality value of the connection. The layer-3 transport packet, upon transmission over the connection, mitigates communication interference on the layer-2 data packet and thereby avoids accidentally setting off the function for triggering the shutdown since the connection will be more robust using layer-3 communication. It should be noted that the communication network may comprise an IP network, a 5G network, an LTE network or any combination thereof, thereby providing a solution that is protocol compatible.

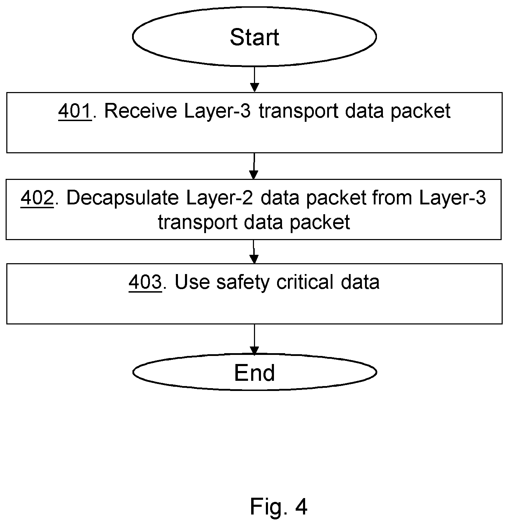

The method actions in the mobile node 15 for obtaining from a network node in the communication network 1, safety critical data for controlling the mining machine according to embodiments herein will now be described with reference to a flowchart depicted in Fig. 4. The actions do not have to be taken in the order stated below, but may be taken in any suitable order. The mobile node 15 is associated with the mining machine 10, and the network node and/or the mobile node 15 comprises a function or a trigger unit for triggering a shutdown of one or more functions at the mining machine 10 upon fulfilment of one or more requirements. Thus, the network node and/or the mobile node 15 may be configured for triggering a shutdown of the one or more functions at the mining machine 10 upon fulfilment of one or more requirements. Embodiments herein mitigate communication interference on the layer-2 data packet and avoids accidentally setting off the shutdown of the one or more functions at the mining machine. It should be noted that the communication network may be a local area network configured to communicatively connect a plurality of mining machines to one or more central control stations carrying one or more network nodes 14. The communication network may e.g. be arranged in an underground mining scenario and/or an above ground mining scenario. The local area network may be a wireless local area network, or a combination of a wired and wireless local area network.

**Action 401.** The mobile node 15 receives, from the network node 14, the layer-3 transport data packet, wherein the layer-3 transport data packet comprises the layer-2 data packet carrying the safety critical data.

**Action 402.** The mobile node 15 retrieves the safety critical data from the layer-3 transport data packet by decapsulating the layer-2 data packet from the layer-3 transport data packet.

**Action 403.** The mobile node 15 further uses the safety critical data in a control process of the mining machine. The safety critical data may comprise one or more values used to control operation of the one or more functions at the mining machine 10.The safety critical data may further comprise values regarding speed and/or direction of the mining machine and the mobile node may use one or more values out of the safety critical data for controlling the mining machine 10. The control process may be for controlling the mobility of the mining machine 10. The safety critical data is used control the one or more functions of the mining machine such as mobility and is sensitive to delays and interruptions and may thus be referred to as redundancy-sensitive data, such as data related to automatic control of mining machine, real time applications or operations, data concerning sensitive operational tasks or similar. Hence, the safety critical data may be used to automatically control the mining machine, to perform real time applications or operations, and/or operational tasks of the mining machine 10. The network node may be arranged at the mining machine or a connected to the mining machine.

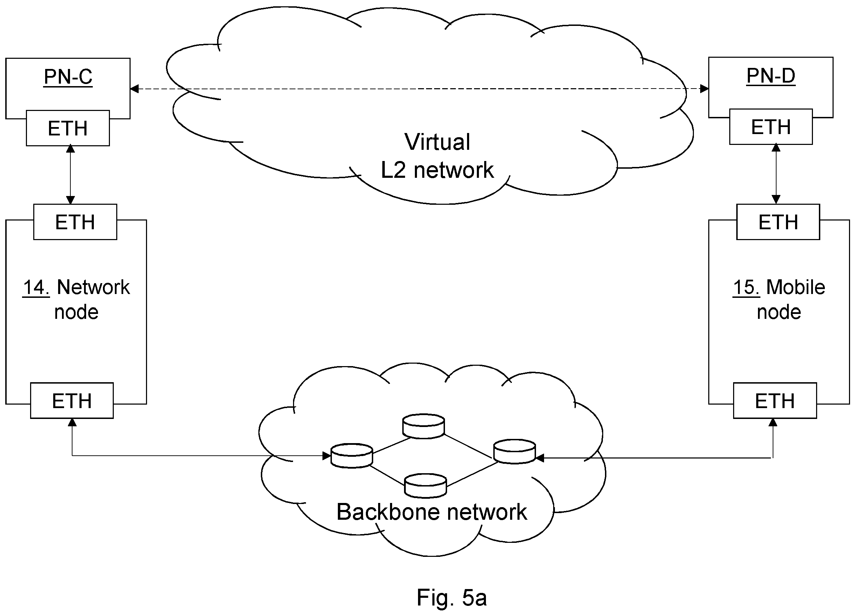

**Fig. 5a** is an exemplary embodiment of implementing a solution according to embodiments herein. The mobile node 15 also referred to as the software defined network (SDN) device located on the mining machine 10 such as a loader may be a computer module or computing processor, whereas the network node 14 located inside the control arrangement such as a safety master cabinet may be data handling processor. Thus, two computer devices may serve as gateways to the industrial devices that require encapsulation of the layer-2 data packet making these industrial devices, e.g. Profinet control (PN-C) and Profinet device (PN-D), completely unaware of the infrastructure in between them by applying a standard overlay protocol such as a standard overlay protocol creating a virtual layer-2 network.

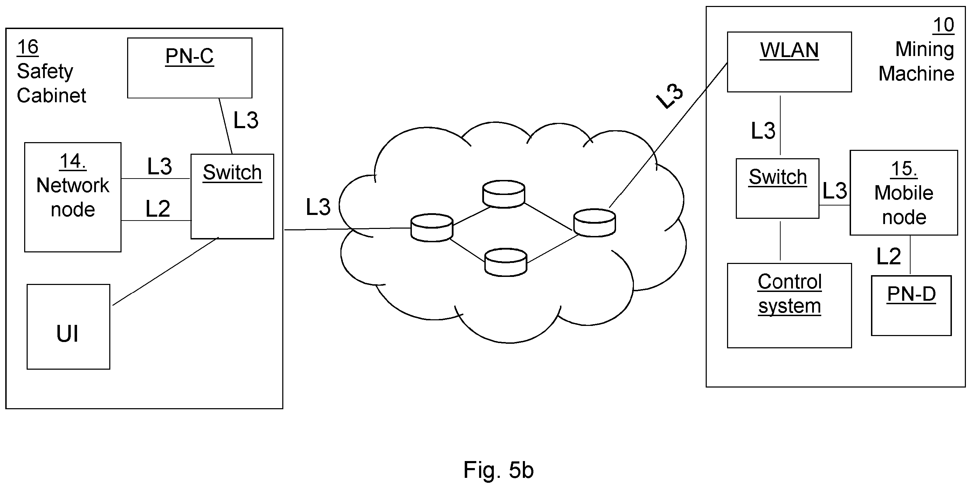

The network node as well as the mobile node may have ports such as Ethernet ports, one used for the Layer-2 network and another one for the Layer-3 network using the communication backbone network. The mobile node 15 may as stated above be arranged at the mining machine 10 being connected from an ethernet port on the mobile node 15 to a LAN port on the Profinet bus coupler (PN-D), see **Fig. 5b****.** The mobile node 15 is further connected to a switch at the mining machine 10 from an ethernet port. In other words, the SDN device, that is, the mobile node 15, is connected between bus coupler (PN-D) and the switch. The switch may then be connected to a wireless LAN (WLAN) module from an ethernet port. The mobile node 15 thus has a layer-2 (L2) connection to the PN-D and a layer-3 (L3) connection to the switch communicating encapsulated layer-2 data packets with the switch.

The network node 14 is connected to a switch from port A to any free switch port. This port is part of the overlay network carrying the Layer-3 transport data packets. The network node 14 is further connected to the switch from port B to any free switch port. This port is part of the normal local area network. All ports on the switch should belong the same virtual local area network (vlan). The network node 14 according to embodiments herein may obtain instructions from a user interface or autonomous control commands for enabling or disabling a shutdown of a function at the mining machine 10 and encapsulates data corresponding to the instructions or control commands into layer-3 transport data packets. The layer-3 transport data packets are then transmitted over the connection between the network node 14 and the mobile node 15. At the mobile node 15 arranged at the mining machine 10, the mobile node 15 retrieves the safety critical data from the layer-3 transport data packets by decapsulating the layer-2 data packet from the layer-3 transport data packet; and use the safety critical data to e.g. enabling or disabling a shutdown of a function at the mining machine 10.

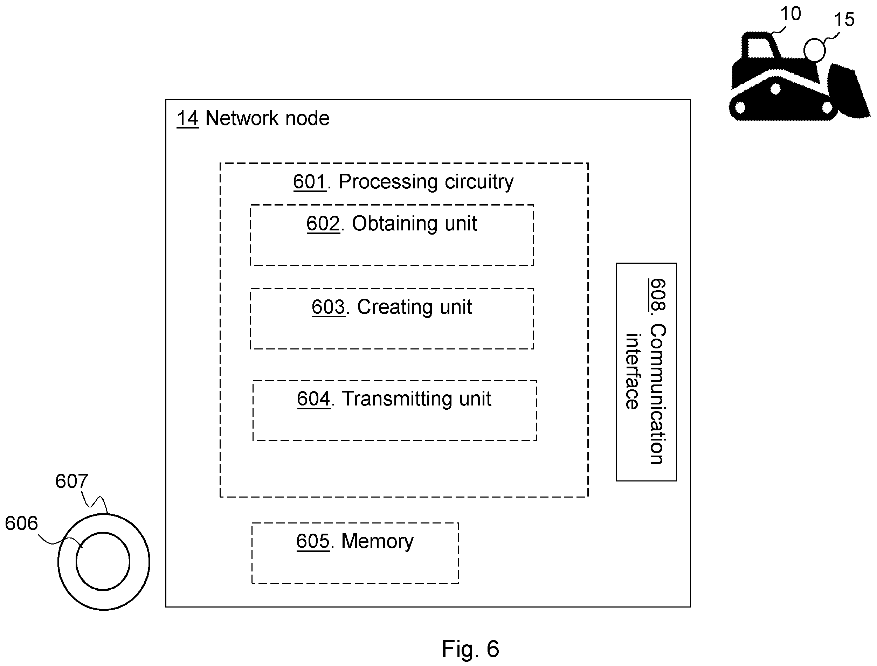

**Fig. 6** is a block diagram depicting embodiments of the network node 14 for mediating to the mobile node 15 in the communication network 1 safety critical data for controlling the mining machine 10 according to embodiments herein. The mobile node 15 is associated with the mining machine 10, and the network node 14 and/or the mobile node 15 comprises a function or a trigger unit for triggering a shutdown of one or more functions at the mining machine upon fulfilment of the one or more requirements. The communication network may be a local area network configured to communicatively connect a plurality of mining machines to one or more central control stations.

The network node 14 may comprise processing circuitry 601, e.g. one or more processors, configured to perform the methods herein.

The network node 14 may comprise an obtaining unit 602, e.g. a receiver or a transceiver. The network node 14, the processing circuitry 601 and/or the obtaining unit 602 is configured to obtain the data packet carrying safety critical data for controlling the mining machine 10. The data packet is a layer-2 data packet. The safety critical data may comprise redundancy-sensitive data. The layer-2 data packet may comprise safety critical data for controlling a mobility of the mining machine.

The network node 14 may comprise **a creating unit 603.** The network node 14, the processing circuitry 601 and/or the creating unit 603 is configured to create a layer-3 transport data packet comprising the layer-2 data packet. The layer-3 transport data packet encapsulates the layer-2 data packet.

The network node 14 may further comprise **a transmitting unit 604,** e.g. a transmitter or a transceiver. The network node 14, the processing circuitry 601 and/or the transmitting unit 604 is configured to transmit the layer-3 transport data packet over the communication network 1 to the mobile node 15. As an example, the one or more requirements may relate to the performance of the connection between the network node 14 and the mobile node 15, e.g. relate to dropped packets, signal strength or quality. Since the layer-3 transport packet, upon transmission over the connection, is not that sensitive to interference on the connection the layer-3 transport data packet mitigates communication interference on the layer-2 data packet and thereby avoids accidentally setting off the function for triggering the shutdown. The communication network may comprise or be an IP network, a 5G network, an LTE network or any combination thereof, thus, embodiments herein are compatible with any communication protocol. Embodiments herein provide a solution that is robust, reliable and independent of type of communication protocol.

The network node 14 further comprises **a memory 605.** The memory 605 comprises one or more units to be used to store data on, such as indications, requirements, strengths or qualities, encapsulation information, configuration, values, scheduling information, timers, applications to perform the methods disclosed herein when being executed, and similar. The network node comprises **a communication interface 608** comprising transmitter, receiver, transceiver and/or one or more antennas.

The methods according to the embodiments described herein for network node 14 are respectively implemented by means of e.g. **a computer program product 606** or a computer program product, comprising instructions, i.e., software code portions, which, when executed on at least one processor, cause the at least one processor to carry out the actions described herein, as performed by the network node 14. The computer program product 606 may be stored **on a computer-readable storage medium 607,** e.g. a universal serial bus (USB) stick, a disc or similar. The computer-readable storage medium 607, having stored thereon the computer program product, may comprise the instructions which, when executed on at least one processor, cause the at least one processor to carry out the actions described herein, as performed by the network node 14. In some embodiments, the computer-readable storage medium may be a non-transitory or transitory computer-readable storage medium. Thus, embodiments herein may disclose a network node 14 for mediating safety critical data in a communication network, wherein the network node 14 comprises processing circuitry and a memory, said memory comprising instructions executable by said processing circuitry whereby said network node 14 is operative to perform any of the methods herein.

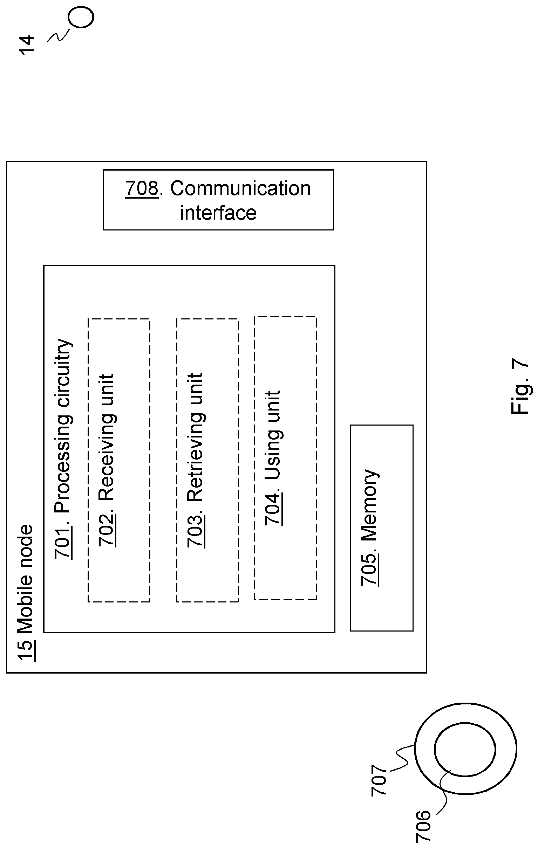

**Fig. 7** is a block diagram depicting embodiments of the mobile node 15 for obtaining data from the network node in the communication network 1 safety critical for controlling the mining machine 10 according to embodiments herein. The mobile node 15 is associated with the mining machine 10, and the network node 14 and/or the mobile node 15 comprises a function or a trigger unit for triggering a shutdown of one or more functions at the mining machine upon fulfilment of the one or more requirements. The mobile node may be arranged at the mining machine. The communication network may be a local area network configured to communicatively connect a plurality of mining machines to one or more central control stations.

The mobile node 15 may comprise **processing circuitry 701,** e.g. one or more processors, configured to perform the methods herein.

The mobile node 15 may comprise **a receiving unit 702,** e.g. a receiver or a transceiver. The mobile node 15, the processing circuitry 701 and/or the receiving unit 702 is configured to receive from the network node 14, the layer-3 transport data packet, wherein the layer-3 transport data packet comprises the layer-2 data packet carrying the safety critical data. The safety critical data may comprise redundancy-sensitive data.

The mobile node 15 may comprise **a retrieving unit 703,** e.g. a decapsulator. The mobile node 15, the processing circuitry 701 and/or the retrieving unit 703 is configured to retrieve the safety critical data from the layer-3 transport data packet by decapsulating the layer-2 data packet from the layer-3 transport data packet.

The mobile node 15 may comprise **a using unit 704,** e.g. a controller. The mobile node 15, the processing circuitry 701 and/or the using unit 704 is configured to use the safety critical data in the control process of the mining machine 10. The control process may be for controlling a mobility of the mining machine.

As shown herein a mining machine may be provided arranged with the mobile node 15 according to embodiments herein.

The mobile node 15 further comprises **a memory 705.** The memory 705 comprises one or more units to be used to store data on, such as indications, requirements, strengths or qualities, decapsulation information, configuration, values, scheduling information, timers, commands to control the mining machine, applications to perform the methods disclosed herein when being executed, and similar. The network node comprises a **communication interface 708** comprising transmitter, receiver, transceiver and/or one or more antennas.

The methods according to the embodiments described herein for the mobile node 15 are respectively implemented by means of e.g. a **computer program product 706** or a computer program product, comprising instructions, i.e., software code portions, which, when executed on at least one processor, cause the at least one processor to carry out the actions described herein, as performed by the mobile node 15. The computer program product 706 may be stored on a **computer-readable storage medium 707,** e.g. a universal serial bus (USB) stick, a disc or similar. The computer-readable storage medium 707, having stored thereon the computer program product, may comprise the instructions which, when executed on at least one processor, cause the at least one processor to carry out the actions described herein, as performed by the mobile node 15. In some embodiments, the computer-readable storage medium may be a non-transitory or transitory computer-readable storage medium. Thus, embodiments herein may disclose a mobile node 15 for obtaining the safety critical data in a communication network, wherein the mobile node 15 comprises processing circuitry and a memory, said memory comprising instructions executable by said processing circuitry whereby said mobile node 15 is operative to perform any of the methods herein.

As will be readily understood by those familiar with communications design, that functions means or units may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a network node (14) for mediating, to a mobile node (15) in a communication network (1), safety critical data for controlling a mining machine, wherein the mobile node (15) is associated with the mining machine (10) and is arranged at or within the mining machine (10), and wherein the network node (14) and/or the mobile node (15) comprises a function for triggering a shutdown of one or more functions at the mining machine upon fulfilment of one or more requirements relating to performance of a connection between the network node and the mobile node, the method comprising:
- *obtaining* (301) a data packet carrying the safety critical data for controlling the mining machine, wherein the data packet is a layer-2 data packet, wherein the layer-2 data packet comprises safety critical data for controlling a mobility of the mining machine;
- *creating* (302) a layer-3 transport data packet comprising the layer-2 data packet, wherein the layer-3 transport data packet encapsulates the layer-2 data packet; and
- *transmitting* (303) the layer-3 transport data packet over the communication network (1)
to the mobile node (15) to mitigate communication
interference on the layer-2 data packet and thereby avoid accidentally setting off the function for triggering the shutdown.

2. The method according to claim 1, wherein the safety critical data comprises redundancy-sensitive data.

3. The method according to any of the claims 1-2, wherein the communication network is a local area network configured to communicatively connect a plurality of mining machines to one or more central control stations.

4. A method performed by a mobile node (15) for obtaining from a network node (14) in a communication network (1), safety critical data for controlling a mining machine (10),wherein the mobile node (15) is associated with the mining machine (10), and is arranged at or within the mining machine (10), and the mobile node (15) and/or the network node (14) comprises a function for triggering a shutdown of one or more functions at the mining machine (10) upon fulfilment of one or more requirements relating to performance of a connection between the mobile node and the network node, the method comprising:
- *receiving* (401), from the network node (14) over the communication network (1), a layer-3 transport data
packet, wherein the layer-3 transport data packet comprises a layer-2 data packet carrying the safety critical data for controlling a mobility of the mining machine;
- *retrieving* (402) the safety critical data from the layer-3 transport data packet by decapsulating the layer-2 data packet from the layer-3 transport data packet; and
*using* (403) the safety critical data in a control process of the mining machine.

5. The method according to claim 4, wherein the safety critical data comprises redundancy-sensitive data.

6. The method according to any of claims 4-5, wherein the communication network is a local area network configured to communicatively connect a plurality of mining machines to one or more central control stations.

7. A computer program comprising instructions, which, when executed on at least one processor, cause the at least one processor to carry out the method according to any of claims 1-3, as performed by the network node, and according to any of claims 4-6, as performed by the mobile node.

8. A computer-readable storage medium, having stored thereon a computer program comprising instructions which, when executed on at least one processor, cause the at least one processor to carry out the method according to any of claims 1-3, as performed by the network node, and according to any of claims 4-6, as performed by the mobile node.

9. A network node (14) for mediating to a mobile node (15) in a communication network (1),safety critical data for controlling a mining machine (10), wherein the mobile node (15) is associated with the mining machine and is arranged at or within the mining machine (10), and wherein the network node comprises a function for triggering a shutdown of one or more functions at the mining machine upon fulfilment of one or more requirements relating to performance of a connection between the network node and the mobile node, and wherein the network node is configured to:
obtain a data packet carrying the safety critical data for controlling the mining machine, wherein the data packet is a layer-2 data packet, wherein the layer-2 data packet comprises safety critical data for controlling a mobility of the mining machine;
create a layer-3 transport data packet comprising the layer-2 data packet, wherein the layer-3 transport data packet encapsulates the layer-2 data packet; and
transmit the layer-3 transport data packet over the communication network (1) to
the mobile node (15) to mitigate communication interference on the layer-2 data packet and thereby avoid accidentally setting off the function for triggering the shutdown.

10. A mobile node (15) for obtaining from a network node (14) in a communication network (1), safety critical data for controlling a mining machine (10), wherein the mobile node is associated with the mining machine, wherein the mobile node (15) associated with the machine is arranged at or within the mining machine (10), and the mobile node comprises a function for triggering a shutdown of one or more functions at the mining machine upon fulfilment of one or more requirements relating to performance of a connection between the network node and the mobile node, and wherein the mobile node is configured to:
receive from the network node, over the communication network (1), a layer-3 transport data packet, wherein the layer-3 transport data packet comprises a layer-2 data packet carrying safety critical data for controlling a mobility of the mining machine;
retrieve the safety critical data from the layer-3 transport data packet by decapsulating the layer-2 data packet from the layer-3 transport data packet; and
use the safety critical data in a control process of the mining machine.

11. Mining machine (10) arranged with the mobile node according to claim 10.

## Patentansprüche

1. Verfahren, das von einem Netzwerkknoten (14) zum Vermitteln von sicherheitskritischen Daten zum Steuern einer Bergbaumaschine an einen mobilen Knoten (15) in einem Kommunikationsnetzwerk (1) durchgeführt wird, wobei der mobile Knoten (15) der Bergbaumaschine (10) zugeordnet ist und an oder innerhalb der Bergbaumaschine (10) angeordnet ist, und wobei der Netzwerkknoten (14) und/oder der mobile Knoten (15) eine Funktion zum Auslösen eines Abschaltens einer oder mehrerer Funktionen an der Bergbaumaschine bei Erfüllung einer oder mehrerer Anforderungen in Bezug auf eine Verbindungsleistung zwischen dem Netzwerkknoten und dem mobilen Knoten umfasst, wobei das Verfahren Folgendes umfasst:
- *Erhalten* (301) eines Datenpakets, das die sicherheitskritischen Daten zum Steuern der Bergbaumaschine trägt, wobei das Datenpaket ein Schicht-2-Datenpaket ist, wobei das Schicht-2-Datenpaket sicherheitskritische Daten zum Steuern einer Mobilität der Bergbaumaschine umfasst,
- *Erzeugen* (302) eines Schicht-3-Transportdatenpakets, das das Schicht-2-Datenpaket umfasst, wobei das Schicht-3- Transportdatenpaket das Schicht-2-Datenpaket verkapselt; und
- *Übertragen* (303) des Schicht-3-Transportdatenpakets über das Kommunikationsnetzwerk (1)
an den mobilen Knoten (15), um Kommunikationsstörung
am Schicht-2-Datenpaket abzuschwächen und dadurch versehentliches Einleiten der Funktion zum Auslösen des Abschaltens zu vermeiden.

2. Verfahren nach Anspruch 1, wobei die sicherheitskritischen Daten redundanzsensitive Daten umfassen.

3. Verfahren nach einem der Ansprüche 1-2, wobei das Kommunikationsnetzwerk ein lokales Netzwerk ist, das konfiguriert ist, um eine Vielzahl von Bergbaumaschinen mit einer oder mehreren zentralen Steuerstationen kommunikativ zu verbinden.

4. Verfahren, das von einem mobilen Knoten (15) zum Erhalten von sicherheitskritischen Daten zum Steuern einer Bergbaumaschine (10) von einem Netzwerkknoten (14) in einem Kommunikationsnetzwerk (1) durchgeführt wird, wobei der mobile Knoten (15) der Bergbaumaschine (10) zugeordnet ist und an oder innerhalb der Bergbaumaschine (10) angeordnet ist und der mobile Knoten (15) und/oder der Netzwerkknoten (14) eine Funktion zum Auslösen eines Abschaltens einer oder mehrerer Funktionen an der Bergbaumaschine (10) bei Erfüllung einer oder mehrerer Anforderungen in Bezug auf eine Verbindungsleistung zwischen dem mobilen Knoten und dem Netzwerkknoten umfasst, wobei das Verfahren Folgendes umfasst:
- *Empfangen* (401) eines Schicht-3-Transportdatenpakets *von dem Netzwerkknoten (14) über das*
Kommunikationsnetzwerk (1), wobei das Schicht-3-Transportdatenpaket ein Schicht-2-Datenpaket umfasst, das die sicherheitskritischen Daten zum Steuern einer Mobilität der Bergbaumaschine trägt,
- *Abrufen* (402) der sicherheitskritischen Daten aus dem Schicht-3-Transportdatenpaket durch Entkapseln des Schicht-2-Datenpakets von dem Schicht-3- Transportdatenpaket; und
*Verwenden* (403) der sicherheitskritischen Daten in einem Steuerungsprozess der Bergbaumaschine.

5. Verfahren nach Anspruch 4, wobei die sicherheitskritischen Daten redundanzsensitive Daten umfassen.

6. Verfahren nach einem der Ansprüche 4-5, wobei das Kommunikationsnetzwerk ein lokales Netzwerk ist, das konfiguriert ist, um eine Vielzahl von Bergbaumaschinen mit einer oder mehreren zentralen Steuerstationen kommunikativ zu verbinden.

7. Computerprogramm, umfassend Anweisungen, die, wenn sie auf mindestens einem Prozessor ausgeführt werden, bewirken, dass der mindestens eine Prozessor das Verfahren nach einem der Ansprüche 1 bis 3 durchführt, wie durch den Netzwerkknoten durchgeführt, und nach einem der Ansprüche 4-6, wie durch den mobilen Knoten durchgeführt.

8. Computerlesbares Speichermedium, auf dem ein Computerprogramm gespeichert ist, umfassend Anweisungen, die, wenn sie auf mindestens einem Prozessor ausgeführt werden, bewirken, dass der mindestens eine Prozessor das Verfahren nach einem der Ansprüche 1 bis 3 durchführt, wie durch den Netzwerkknoten durchgeführt, und nach einem der Ansprüche 4-6, wie durch den mobilen Knoten durchgeführt.

9. Netzwerkknoten (14) zum Vermitteln von sicherheitskritischen Daten zum Steuern einer Bergbaumaschine (10) an einen mobilen Knoten (15) in einem Kommunikationsnetzwerk (1), wobei der mobile Knoten (15) der Bergbaumaschine zugeordnet ist und an oder innerhalb der Bergbaumaschine (10) angeordnet ist, und wobei der Netzwerkknoten eine Funktion zum Auslösen eines Abschaltens einer oder mehrerer Funktionen an der Bergbaumaschine bei Erfüllung einer oder mehrerer Anforderungen in Bezug auf eine Verbindungsleistung zwischen dem Netzwerkknoten und dem mobilen Knoten umfasst, und wobei der Netzwerkknoten konfiguriert ist zum:
Erhalten eines Datenpakets, das die sicherheitskritischen Daten zum Steuern der Bergbaumaschine trägt, wobei das Datenpaket ein Schicht-2-Datenpaket ist, wobei das Schicht-2-Datenpaket sicherheitskritische Daten zum Steuern einer Mobilität der Bergbaumaschine umfasst,
Erzeugen eines Schicht-3-Transportdatenpakets, das das Schicht-2-Datenpaket umfasst, wobei das Schicht-3-Transportdatenpaket das Schicht-2-Datenpaket verkapselt; und
Übertragen des Schicht-3-Transportdatenpakets über das Kommunikationsnetzwerk (1) an den mobilen Knoten (15), um Kommunikationsstörung am Schicht-2-Datenpaket abzuschwächen, und dadurch versehentliches Einleiten der Funktion zum Auslösen des Abschaltens zu vermeiden.

10. Mobiler Knoten (15) zum Erhalten von sicherheitskritischen Daten zum Steuern einer Bergbaumaschine (10) von einem Netzwerkknoten (14) in einem Kommunikationsnetzwerk (1), wobei der mobile Knoten der Bergbaumaschine zugeordnet ist, wobei der mobile Knoten (15), der der Maschine zugeordnet ist, an oder innerhalb der Bergbaumaschine (10) angeordnet ist und der mobile Knoten eine Funktion zum Auslösen eines Abschaltens einer oder mehrerer Funktionen an der Bergbaumaschine bei Erfüllung einer oder mehrerer Anforderungen in Bezug auf eine Verbindungsleistung zwischen dem Netzwerkknoten und dem mobilen Knoten umfasst, und wobei der mobile Knoten konfiguriert ist zum:
Empfangen eines Schicht-3-Transportdatenpakets von dem Netzwerkknoten über das Kommunikationsnetzwerk (1), wobei das Schicht-3- Transportdatenpaket ein Schicht-2-Datenpaket umfasst, das sicherheitskritische Daten zum Steuern einer Mobilität der Bergbaumaschine trägt,
Abrufen der sicherheitskritischen Daten aus dem Schicht-3- Transportdatenpaket durch Entkapseln des Schicht-2-Datenpakets von dem Schicht-3-Transportdatenpaket; und
Verwenden der sicherheitskritischen Daten in einem Steuerungsprozess in der Bergbaumaschine.

11. Bergbaumaschine (10), die mit dem mobilen Knoten nach Anspruch 10 angeordnet ist.

## Revendications

1. Procédé mis en œuvre par un nœud de réseau (14) pour transmettre, à un nœud mobile (15) dans un réseau de communication (1), des données critiques de sécurité pour commander une machine d'exploitation minière, dans lequel le nœud mobile (15) est associé à la machine d'exploitation minière (10) et est agencé au niveau de la machine d'exploitation minière (10) ou dans celle-ci, et dans lequel le nœud de réseau (14) et/ou le nœud mobile (15) comprennent une fonction pour déclencher un arrêt d'une ou plusieurs fonctions au niveau de la machine d'exploitation minière lors de la satisfaction d'une ou plusieurs exigences se rapportant à la réalisation d'une connexion entre le nœud de réseau et le nœud mobile, le procédé comprenant :
- *l'obtention* (301) d'un paquet de données portant les données critiques de sécurité pour commander la machine d'exploitation minière, dans lequel le paquet de données est un paquet de données de couche 2, dans lequel le paquet de données de couche 2 comprend des données critiques de sécurité pour commander une mobilité de la machine d'exploitation minière ;
- *la création* (302) d'un paquet de données de transport de couche 3 comprenant le paquet de données de couche 2, dans lequel le paquet de données de transport de couche 3 encapsule le paquet de données de couche 2 ; et
- *la transmission* (303) du paquet de données de transport de couche 3 par le réseau de communication (1) au nœud mobile (15) pour atténuer l'interférence de communication sur le paquet de données de couche 2 et éviter ainsi le lancement accidentel de la fonction de déclenchement de l'arrêt.

2. Procédé selon la revendication 1, dans lequel les données critiques de sécurité comprennent des données sensibles à la redondance.

3. Procédé selon l'une quelconque des revendications 1 à 2, dans lequel le réseau de communication est un réseau local configuré pour connecter en communication une pluralité de machines d'exploitation minière à une ou plusieurs stations de commande centrale.

4. Procédé mis en œuvre par un nœud mobile (15) pour obtenir, depuis un nœud de réseau (14) dans un réseau de communication (1), des données critiques de sécurité pour commander une machine d'exploitation minière (10),dans lequel le nœud mobile (15) est associé à la machine d'exploitation minière (10), et est agencé au niveau de la machine d'exploitation minière (10) ou dans celle-ci, et le nœud mobile (15) et/ou le nœud de réseau (14) comprennent une fonction pour déclencher un arrêt d'une ou plusieurs fonctions au niveau de la machine d'exploitation minière (10) lors de la satisfaction d'une ou plusieurs exigences se rapportant à la réalisation d'une connexion entre le nœud mobile et le nœud de réseau, le procédé comprenant :
- *la réception* (401), en provenance du nœud de réseau (14) par le réseau de communication (1), d'un paquet de données de transport de couche 3, dans lequel le paquet de données de transport de couche 3 comprend un paquet de données de couche 2 portant les données critiques de sécurité pour commander une mobilité de la machine d'exploitation minière ;
- *la récupération* (402) des données critiques de sécurité depuis le paquet de données de transport de couche 3 en décapsulant le paquet de données de couche 2 du paquet de données de transport de couche 3 ; et
- *l'utilisation* (403) des données critiques de sécurité dans un processus de commande de la machine d'exploitation minière.

5. Procédé selon la revendication 4, dans lequel les données critiques de sécurité comprennent des données sensibles à la redondance.

6. Procédé selon l'une quelconque des revendications 4 à 5, dans lequel le réseau de communication est un réseau local configuré pour connecter en communication une pluralité de machines d'exploitation minière à une ou plusieurs stations de commande centrale.

7. Programme informatique comprenant des instructions, qui, lorsqu'elles sont mises en œuvre sur au moins un processeur, amènent le au moins un processeur à mettre en œuvre le procédé selon l'une quelconque des revendications 1 à 3, tel que mis en œuvre par le nœud de réseau, et selon l'une quelconque des revendications 4 à 6, tel que mis en œuvre par le nœud mobile.

8. Support de stockage lisible par ordinateur, sur lequel est stocké un programme informatique comprenant des instructions qui, lorsqu'elles sont mises en œuvre sur au moins un processeur, amènent le au moins un processeur à mettre en œuvre le procédé selon l'une quelconque des revendications 1 à 3, tel que mis en œuvre par le nœud de réseau, et selon l'une quelconque des revendications 4 à 6, tel que mis en œuvre par le nœud mobile.

9. Nœud de réseau (14) pour transmettre à un nœud mobile (15) dans un réseau de communication (1), des données critiques de sécurité pour commander une machine d'exploitation minière (10), dans lequel le nœud mobile (15) est associé à la machine d'exploitation minière et est agencé au niveau de la machine d'exploitation minière (10) ou dans celle-ci, et dans lequel le nœud de réseau comprend une fonction pour déclencher un arrêt d'une ou plusieurs fonctions au niveau de la machine d'exploitation minière lors de la satisfaction d'une ou plusieurs exigences se rapportant à la réalisation d'une connexion entre le nœud de réseau et le nœud mobile, et dans lequel le nœud de réseau est configuré pour :
obtenir un paquet de données portant les données critiques de sécurité pour commander la machine d'exploitation minière, dans lequel le paquet de données est un paquet de données de couche 2, dans lequel le paquet de données de couche 2 comprend des données critiques de sécurité pour commander une mobilité de la machine d'exploitation minière ;
créer un paquet de données de transport de couche 3 comprenant le paquet de données de couche 2, dans lequel le paquet de données de transport de couche 3 encapsule le paquet de données de couche 2 ; et
transmettre le paquet de données de transport de couche 3 par le réseau de communication (1) au nœud mobile (15) pour atténuer l'interférence de communication sur le paquet de données de couche 2 et éviter ainsi le lancement accidentel de la fonction de déclenchement de l'arrêt.

10. Nœud mobile (15) pour obtenir, depuis un nœud de réseau (14) dans un réseau de communication (1), des données critiques de sécurité pour commander une machine d'exploitation minière (10), dans lequel le nœud mobile est associé à la machine d'exploitation minière, dans lequel le nœud mobile (15) associé à la machine est agencé au niveau de la machine d'exploitation minière (10) ou dans celle-ci, et le nœud mobile comprend une fonction pour déclencher un arrêt d'une ou plusieurs fonctions au niveau de la machine d'exploitation minière lors de la satisfaction d'une ou plusieurs exigences se rapportant à la réalisation d'une connexion entre le nœud mobile et le nœud mobile, et dans lequel le nœud mobile est configuré pour :
recevoir, en provenance du nœud de réseau, par le réseau de communication (1), un paquet de données de transport de couche 3, dans lequel le paquet de données de transport de couche 3 comprend un paquet de données de couche 2 portant des données critiques de sécurité pour commander une mobilité de la machine d'exploitation minière ;
récupérer les données critiques de sécurité depuis le paquet de données de transport de couche 3 en décapsulant le paquet de données de couche 2 du paquet de données de transport de couche 3 ; et utiliser les données critiques de sécurité dans un processus de commande de la machine d'exploitation minière.

11. Machine d'exploitation minière (10) agencée avec le nœud mobile selon la revendication 10.
